# DEMANDE DE BREVET EUROPEEN

(11) **EP 0 839 566 A1**
(43) Date de publication de la demande: **06.05.1998**
(21) Numéro de dépôt: 97402552.0
(22) Date de dépôt: 28.10.1997
(51) Int. Cl.: B01D 45/02, B01D 45/04, B01D 45/06, B01D 45/08, F01N 3/02

(54) **Dispositif destiné à débarrasser un courant gazeux passant dans une ligne de conduite des particules solides qu'il entraîne**

(30) Priorité: 29.10.1996 FR 9613172
(71) Demandeur: RENAULT, 92109 Boulogne-Billancourt (FR)
(72) Inventeur: Allancon, Laurence, 75116 Paris (FR)

(57) **Abrégé**

Dans ce dispositif destiné à débarrasser un courant gazeux passant dans une ligne de conduite des particules solides qu'il entraîne, la ligne de conduite comporte un tube 2 dont l'extrémité 4 en aval est fermée. En amont de l'extrémité 4, il est prévu un séparateur 7, 8 des particules utilisant leur inertie par rapport aux gaz. Ce dispositif s'applique notamment dans les lignes d'échappement des gaz d'un moteur à combustion interne.

## Description

La présente invention se rapporte aux dispositifs destinés à débarrasser un courant gazeux passant dans une ligne de conduite des particules solides qu'il entraîne. L'invention peut s'appliquer notamment aux industries chimiques, mais l'une de ses applications de choix est le traitement des gaz d'échappement des moteurs à combustion interne.

Les gaz d'échappement issus des moteurs diesel sont composés d'hydrocarbures imbrûlés, de monoxyde de carbone, d'oxyde d'azote et de particules. Les réglementations législatives en termes d'émission de polluants visent à fixer des normes non seulement pour les espèces gazeuses, mais également pour les particules solides. Il faut donc les éliminer. Ces particules sont, en général, de dimension relativement petite, mais peuvent s'agréger en des agrégats de dimension non négligeable. On connaît déjà des systèmes mettant en oeuvre des filtres. Si le filtre s'engorge, la ligne d'échappement se bouche. En outre, il peut se produire une régénération intempestive du filtre, avec libération des particules qu'il est censé retenir, sous l'effet d'une bouffée de gaz chauds d'échappement due à un mauvais fonctionnement du moteur. Enfin, ces dispositifs sont souvent peu faciles à monter et à démonter et incompatibles avec des architectures de véhicules automobiles souhaitées.

L'invention pallie ces inconvénients par un dispositif destiné à débarrasser un courant gazeux passant dans une ligne de conduite des particules solides qu'il entraîne, qui supprime radicalement toute possibilité que la ligne de conduite se bouche, qui prévient toute régénération intempestive, qui facilite beaucoup le montage et le démontage du dispositif de retenue des particules sans encombrement supplémentaire ou avec peu d'encombrement supplémentaire et qui facilite beaucoup l'enlèvement d'un piège ou filtre saturé et son remplacement.

Suivant l'invention, le dispositif comporte un élément de tube présentant une extrémité ouverte débouchant dans ladite ligne de conduite et une extrémité opposée fermée, et des moyens séparateurs des particules utilisant leur inertie par rapport aux gaz, lesdits moyens séparateurs étant aptes à diriger les particules vers ladite extrémité ouverte tout en détournant le courant gazeux à l'extérieur de celle-ci.

Comme le cul de sac ou extrémité fermée, où peut être placé un dispositif de retenue des particules tel qu'un filtre ou un piège avec éventuellement possibilité d'un traitement thermique, n'a plus à être traversé par les gaz, il ne peut plus constituer un bouchon. De la même façon, le fait que le courant gazeux ne passe plus à travers le filtre fait qu'une bouffée de gaz chauds ne peut plus avoir les effets néfastes de régénération intempestive ou de libération des particules qui y sont fixées.

Le tube se terminant en cul de sac est soit incliné sur l'horizontale, soit en position verticale, le cul de sac étant, de préférence, en la position la plus basse. Les particules sont ainsi retenues par la gravité au bas du tube ou dans le dispositif de retenue.

Dans un mode de réalisation particulièrement peu encombrant, le tube est enfilé dans une tubulure de la ligne et le séparateur est un convergent-divergent prévu dans la tubulure et dont le col est juste en amont de l'embouchure du tube. Comme le tube est enfilé dans la tubulure existante, il n'occupe pas de place supplémentaire. Le convergent-divergent, en déviant une partie du courant chargé de particules vers le centre dans le tube et une autre partie du courant déjà débarrassée des particules autour du tube, empêche qu'il arrive beaucoup de gaz éventuellement chaud dans le cul de sac où se trouve le dispositif de retenue des particules. Si le cul de sac se trouve au bout de la ligne de conduite, il est facile à démonter et à monter, ainsi qu'à remplacer.

Suivant un autre mode de réalisation, qui permet également d'obtenir ces facilités de montage et de remplacement même en milieu de ligne de conduite, le séparateur est constitué d'un conduit dont l'embouchure est en amont du fond du tube et est tournée vers le cul de sac. Les gaz chargés de particules arrivent par le tube. Les particules se déposent dans le cul de sac, tandis que le gaz repart par le conduit. Comme le cul de sac se trouve à une extrémité de la ligne, il est facilement accessible au montage, notamment pour être remplacé.

Suivant un mode de réalisation, il est prévu entre l'embouchure du conduit et le cul de sac, outre éventuellement une chicane, un clapet. Ce clapet ne s'ouvre que lorsque la pression ou le poids en amont est suffisant, en sorte qu'il constitue une sécurité supplémentaire, empêchant les particules de refluer vers l'amont.

Au dessin annexé, donné uniquement à titre d'exemple :
La figure 1 est une vue en coupe schématique d'une ligne d'échappement des gaz d'un moteur diesel, et
La figure 2 est une vue en coupe d'une variante.

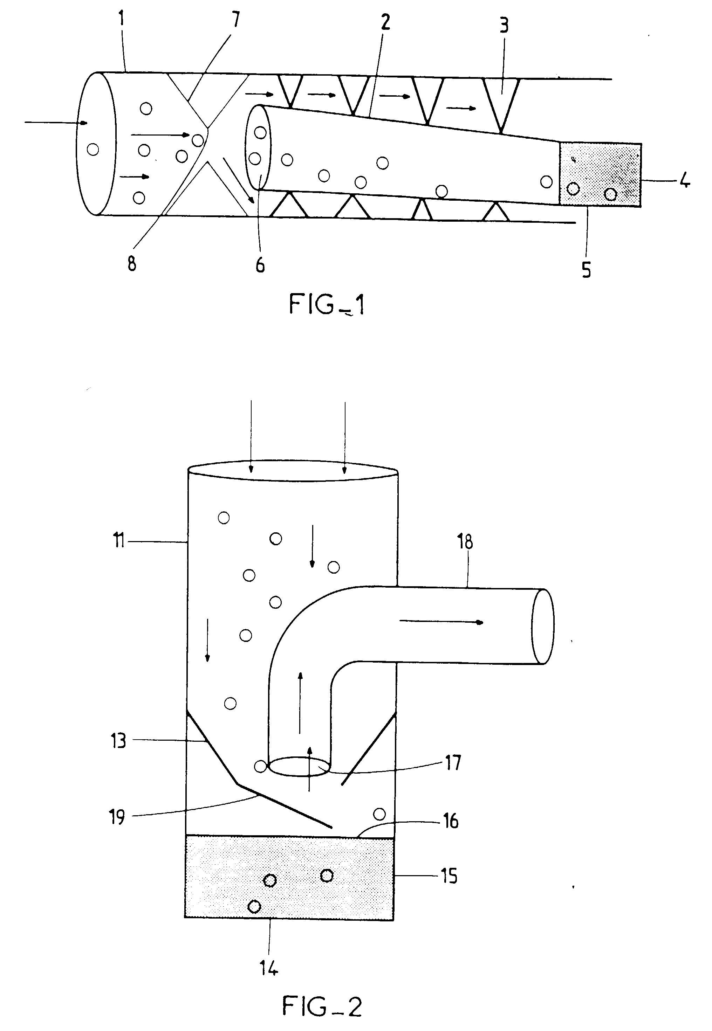

La ligne d'échappement, représentée à la figure 1, comporte une tubulure 1 à l'entrée de laquelle arrive un courant gazeux entraînant des particules solides. Un tube 2, incliné sur l'horizontale, est enfilé dans la tubulure et y est fixé par des dispositifs de fixation 3. L'extrémité en aval du tube est en cul de sac 4. Dans le cul de sac 4 est prévu un dispositif 5 de retenue des particules, tel qu'un piège ou un filtre. En amont de l'embouchure 6 du tube 2 est prévu dans la tubulure 1 un convergent-divergent 7 dont le col 8 est juste en amont de l'embouchure 6 du tube 2.

Le courant gazeux chargé de particules est subdivisé par le convergent-divergent 7 en un courant gazeux chargé de particules, qui pénètre dans le tube 2 et dont les particules sont retenues par le filtre 5 et en un courant gazeux qui passe dans la tubulure 1 autour du tube 2. Le filtre 5, même s'il est engorgé, ne peut en aucun cas faire obstacle au libre passage du gaz autour du tube 2 dans la tubulure 1. Il ne peut pas se produire de régénération intempestive du filtre 5, puisque celui-ci n'est pas traversé par un courant gazeux.

A la figure 2, les gaz arrivent par le tube 11 vertical dans le tube ayant une extrémité 16 amont et un fond 14 formant cul de sac où est logé un piège 15 à particules, en étant déviés par un cône déviateur 13 qui porte un clapet 19. Dans le tube 11 est prévu un conduit 18 dont l'embouchure 17 est en amont de l'extrémité 16, ainsi que du piège 15 et du clapet 19, et est tournée vers l'extrémité fermée 14. Ce conduit 18 est coudé et sort à l'extérieur du tube 11 pour constituer la suite de la ligne d'échappement.

Bien que le piège 15 ne soit pas à l'extrémité de la ligne d'échappement, il est facilement accessible, puisque mécaniquement il est à une extrémité du tube 11 et peut donc être changé très facilement. Le piège 15 n'est pas non plus traversé par le courant, en sorte que le dispositif ne peut pas se boucher et que toute régénération intempestive est exclue.

## Revendications

1. Dispositif destiné à débarrasser un courant gazeux passant dans une ligne de conduite des particules solides qu'il entraîne, caractérisé en ce qu'il comporte un élément de tube (2) présentant une extrémité ouverte (6) débouchant dans ladite ligne de conduite et une extrémité opposée fermée (4), et des moyens séparateurs (7) des particules utilisant leur inertie par rapport aux gaz, lesdits moyens séparateurs (7) étant aptes à diriger les particules vers ladite extrémité ouverte (6) tout en détournant le courant gazeux à l'extérieur de celle-ci.

2. Dispositif suivant la revendication 1, caractérisé par un dispositif (5) de retenue des particules à l'extrémité fermée.

3. Dispositif suivant la revendication 1 ou 2, caractérisé en ce que le tube (2) est incliné sur l'horizontale, l'extrémité fermée (4) étant de préférence en la position la plus basse.

4. Dispositif suivant l'une des revendications précédentes, caractérisé en ce que le tube (2) est enfilé dans une tubulure (1) de la ligne et le séparateur est un convergent-divergent (7) prévu dans la tubulure (1) et dont le col (8) est juste en amont de l'embouchure (6) du tube (2).

5. Dispositif suivant l'une des revendications 1 à 3, caractérisé en ce que le séparateur est constitué d'un conduit (18) dont l'embouchure (17) est en amont de l'extrémité fermée (14) du tube (11) et est tournée vers celle-ci (14).

6. Dispositif suivant la revendication 5, caractérisé en ce que le conduit (18) traverse le tube (11) par un coude.

7. Dispositif suivant la revendication 5 ou 6, caractérisé par une chicane (13) de déviation entre l'embouchure (17) et l'extrémité fermée (14).

8. Dispositif suivant l'une des revendications 5 à 7, caractérisé par un clapet (19) entre l'embouchure (17) et l'extrémité fermée (14).

9. Dispositif suivant l'une des revendications précédentes, caractérisé en ce que la ligne de conduite est une ligne d'échappement des gaz d'un moteur à combustion interne.
